# EUROPEAN PATENT APPLICATION

(11) **EP 1 645 547 A1**
(43) Date of publication of application: **12.04.2006**
(21) Application number: 04732803.4
(22) Date of filing: 13.05.2004
(51) Int. Cl.: C03B 37/04, D01D 5/08

(54) **METHOD AND APPARATUS FOR MANUFACTURING GLASS FIBER**

(30) Priority: 16.05.2003 JP 2003138541
(71) Applicant: Paramount Glass Manufacturing Co., Ltd., Koriyama-shim, Fukushima 963-8017 (JP)
(72) Inventor: OTAKI, Keiji, c/o Koriyama Factory Paramount, Koriyama-shi, Fukushima 963-8017 (JP); YODA, Mitsuji, c/o Koriyama Factory Paramount, Koriyama-shi, Fukushima 963-8017 (JP); HARADA, Yoshiyuki, c/o Koriyama Factory Paramount, Koriyama-shi, Fukushima 963-8017 (JP)
(74) Representative: Crouch, David John
(86) International application number: PCT/JP2004/006777
(87) International publication number: WO 2004/101459

(57) **Abstract**

A method of producing glass fiber comprising:
driving a bottomed hollow cylindrical rotor (4) to rotate at high speed around a vertical rotary shaft (7), said rotor (4) comprising a bottom (11), a peripheral wall (8) and an annular flange (25), said peripheral wall (8) being extended upwardly from an outer peripheral edge of the bottom (11) and provided with a large number of fine holes (9), said annular flange (25) extending inwardly from an upper edge of the peripheral wall (8);
falling molten glass (10) to the bottom (11) of the rotor (4); and
ejecting molten glass (10) through said fine holes (9) by centrifugal force generated by the high speed rotation of the rotor (4), to form the molten glass into filaments, and to produce glass fiber; **characterized in that**
molten glass is made to fall at a position (26) on the bottom (11), said position (26) being apart from an inner edge (31) of said annular flange (25) by at least 10mm or more, and apart from an inner surface (8A) of said peripheral wall (8) by not more than 75mm, the bottom (11) having a large thickness at the position (26).

## Description

### FIELD OF THE INVENTION

This invention relates to an improvement to a method and an apparatus for producing glass fiber by means of a centrifugal process.

### RELATED ARTS

Known methods and/or apparatus for producing glass fiber by means of a centrifugal process include the following. For example, Japanese Patent Publication No. Hei 6-49588 discloses a glass fiber producing apparatus comprising a centrifugal injection apparatus that is supported by a hollow shaft assembly, arranged horizontally and adapted to rotate at high speed and a distribution basket (see, inter alia, FIGS. 1, 3 and 4 of the patent document).

Japanese Patent Publication No. Sho 44-23141 discloses a method and apparatus for forming fiber, the apparatus having a centrifugal rotor fitted to a downwardly inclined shaft (see, FIG. 1 of the patent document).

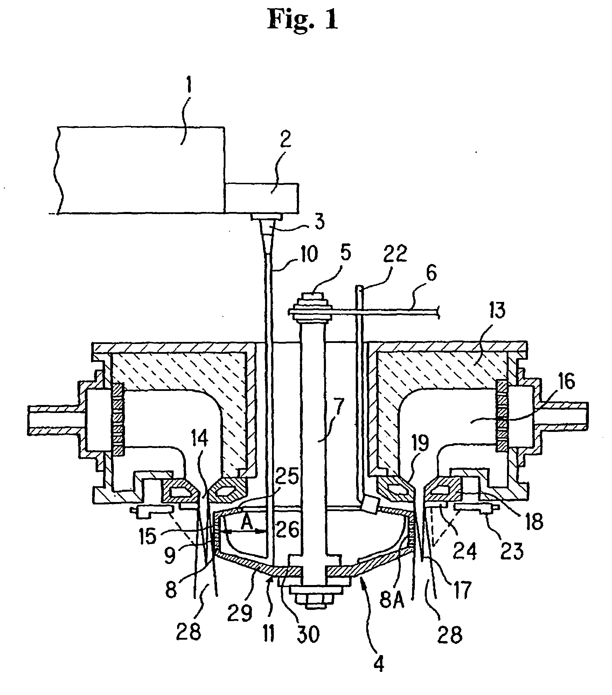

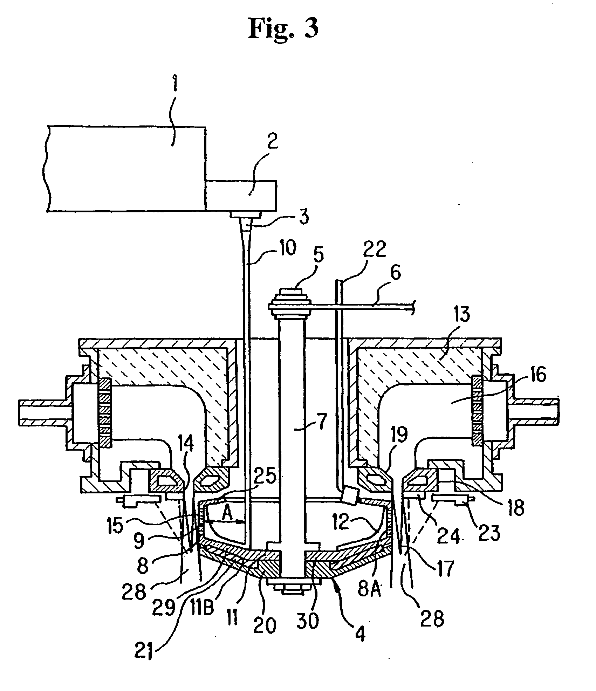

Japanese Patent Publication No. Sho 50-20612 discloses a fiber producing apparatus having a rotor with one of the opposite ends thereof closed by a saucer-like bottom or floor having no hole, the rotor being rigidly fitted to a flexible shaft and adapted to rotate at high speed (see, FIGS. 3, 4 and 5 of the patent document). Japanese Patent Application Laid-Open No. Hei 9-295824 discloses a fiber producing apparatus having a thermally insulating / heat preserving section arranged on the entire bottom surface of the rotor of the apparatus (see, FIGS. 1 and 3).

### <Japanese Patent Publication No. Hei 6-49588>

With the thermally insulating inorganic fiber forming method as described in said Japanese Patent Publication No. Hei 6-49588, a continuous flow of a molten material falls along the axis of a hollow shaft and is supplied to the bottom part of a distribution basket. Said material is discharged through a large number of orifices formed along a peripheral section of the distribution basket by centrifugal force, to form a continuous layer of the molten material along the inner surface of the peripheral wall of the centrifugal injection apparatus. Then, the molten material is injected through the orifices of the peripheral wall by filament-forming gas flows to produce filaments.

With this producing method, the temperature of the molten material falls significantly during the time period from the time when it arrives at the bottom part of the distribution basket to the time when it is injected through the orifices of the peripheral section. In other words, the material has to be heated to a high temperature. Therefore, this method is accompanied by a drawback that the distribution basket needs to be formed by using expensive metal such as platinum or rhodium. Additionally, the method is also accompanied by a problem that the formed filaments of glass fiber show diameters that are dispersed remarkably, because the large number of flows of the molten material that are discharged from the distribution basket are subjected to a cooling effect, which is hardly controllable, to form a continuous layer of the molten material along the inner surface of the peripheral wall of the centrifugal injection apparatus and subsequently discharged again as fine flows. Still additionally, since the hot and quickly moving molten material directly collides with the inner surface of the peripheral wall of the centrifugal injection apparatus, the inner surface of the peripheral wall is significantly abraded to reduce the service life of the injection apparatus.

### <Japanese Patent Publication No. Sho 44-23141>

According to Japanese Patent Publication No. Sho 44-23141, a centrifugal rotor is fitted to a downwardly inclined shaft, and molten glass is made to form a free fall flow having a vertical axial line, so as to be supplied onto fiber forming orifices in the inside of the rotor. Then, molten glass is injected through the orifices by the centrifugal force of the centrifugal rotor to produce filaments. This producing method is accompanied by the following problems.
(1) Since the centrifugal rotor is made to overhang (cantilevered), it can easily vibrate when it is driven to rotate at high speed. As the centrifugal rotor vibrates, the produced filaments are can hardly become uniform. Then, there arises a problem that the rotor is deformed due to vibrations and its service life is reduced. Additionally, the service life of the drive system of the rotor is also reduced, because of the deformation of the rotor.
(2) Since hot and molten glass falls onto the fiber-forming orifices at the free fall speed in the inside of the centrifugal rotor, the peripheral wall of the rotor is abraded to reduce the service life of the rotor. Additionally, as the temperature of the molten glass changes, its viscosity changes to disperse the diameters of filaments. Therefore it is difficult to produce high quality fiber.

### <Japanese Patent Publication No. Sho 50-20612>

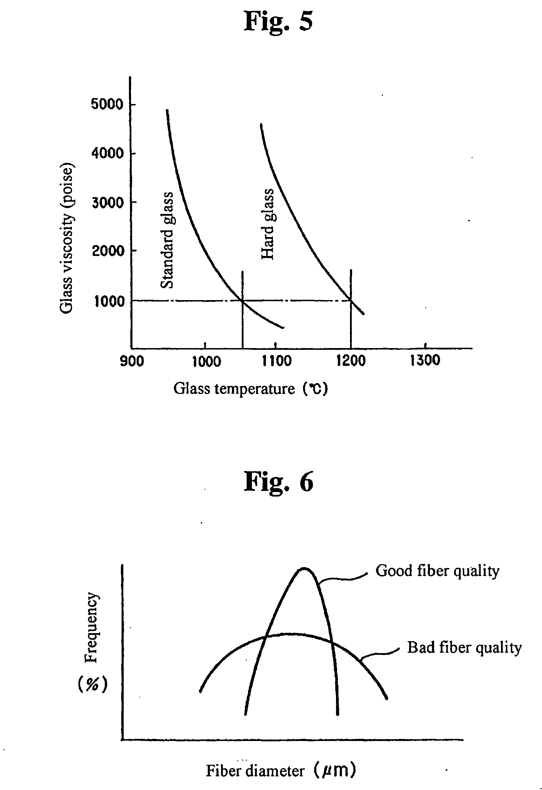

According to Japanese Patent Publication No. Sho 50-20612, a flow of molten glass is supplied to a frusto-conical sloped part of the floor or the bottom of a rotor, and is forced to flow to the inner peripheral wall of the rotor by centrifugal force. Subsequently, it is discharged through small orifices arranged at a part of the rotor with a reduced wall thickness to become filaments, while the revolutions of the rotor are made to vary. This producing apparatus is accompanied by the following problems.
(1) Since hot and molten glass falls onto the surface of the sloped cannel on the floor of the rotor and then to the inner peripheral wall of the rotor due to centrifugal force, the surface of the sloped channel is abraded to lose the wall thickness. The abrasion is most remarkable at the position where the falling glass collides with the floor of the rotor. The sloped channel is driven to fall by the centrifugal force to lose its gradient and deform the rotor. Then, the rotor can lose its balance to consequently give rise to vibrations, which by turn reduce the service life of the rotor and prevent uniform filaments from being produced.
(2) Japanese Patent Publication No. Sho 50-20612 does not describe anything about the distance A from the inner surface of the wall of the rotor to the position where the falling molten glass collides with (see FIGS. 1, 2 and 3).
   If the distance A is large, the temperature fall of the falling molten glass is large when it reaches to the inner surface of the wall. Therefore, the temperature of the supplied molten glass needs to be raised in order to ensure a necessary level of viscosity for forming fiber and to prevent the orifices from being clogged by crystallized glass. Then, there arise a number of problems including a reduced service life of the rotor due to the increased energy of the molten glass and the accelerated abrasion of the rotor, uneven diameters of filaments due to a disturbed glass discharge pattern from the small orifices of the wall of the rotor, and an increase in the energy necessary for producing filaments. These problems are particularly remarkable for highly viscous glass that shows a high liquid phase temperature and a small difference between the fiber producing temperature and the liquid phase temperature such as glass that is free from boric acid.
   If, on the other hand, the distance A is small, the temperature change and hence the viscosity change of the supplied molten glass delicately affects the temperature change in the wall of the rotor to give rise to dispersed filament diameters, so that it is difficult to produce high quantity fiber.
   Additionally, the rotor is made of expensive heat-resistant metal. Therefore, it is desirable to reduce the weight of the rotor as much as possible from the viewpoint of reducing the producing cost and that of the dynamics of high speed revolutions.
   To solve the above problems, it is desirable that the wall thickness of the sloped channel of the rotor is gradually reduced to become close to the wall thickness of the lower part of the peripheral wall unlike the structure illustrated in FIGS. 4 and 5 of Japanese Patent Publication No. Sho 50-20612. However, if the wall thickness of the sloped channel of the rotor illustrated in FIGS. 4 and 5 is gradually reduced, hot and molten glass falls to the area where the wall thickness is reduced to make the above described problem (1) more remarkable.
(3) According to Japanese Patent Publication No. Sho 50-20612, the wall thickness of the peripheral wall of the rotor is made to vary in the illustrated manner. However, such a structure can make the process of cutting the rotor and that of boring the orifices highly complex, and consequently raise the producing cost.

### <Japanese Patent Laid-Open No. Hei 9-295824>

Japanese Patent Application Laid-Open No. Hei 9-295824 describes a spinner provided on the outer surface of the bottom thereof with a thermally insulating section, which thermally insulated section is formed by filling the gap between a dish-like plate made of a heat resistant material and the spinner bottom with a mat of inorganic short fiber filaments. However, as clearly shown in FIG. 1 of the patent document, the mat is arranged on the entire surface of the spinner bottom. In other words, no consideration is specifically given to the appropriate area of the thermally insulating section. FIG. 3 of the patent document simply shows a specific example of the structure for fitting said plate to the bottom (the lowermost line of Column 4 to Line 9, Column 5 in Japanese text) and does not define the area of the thermally insulating section. Thus, the spinner described in the patent document is accompanied by a problem that it does not take the strength and the producing cost of the thermally insulating section into consideration.

The following problems arise when the area of the thermally insulating layer is too large.
(1) Waste of the excessive thermally insulating material arranged in the unnecessary part of the area.
(2) The unnecessary part of the spinner is thermally insulated (heated) and particularly the temperature of the engaging (fitting) section of the bottom and the drive shaft (rotary shaft) rises for nothing to consequently reduce the strength and hence the service life of the spinner. Additionally, the temperature of the drive-related parts such as the drive shaft also rises to reduce its service life.

While a flange is provided along the outer periphery of said plate, no projecting is arranged at the lower surface side of the spinner, and a gap is provided between the projection-free part of the lateral edge of the bottom and the upper edge of the plate. However with such a gapped structure, some of the short fiber filaments of the mat can be driven to fly out and scatter through the gap due to the centrifugal force, if the density thereof is smaller than 10kg/m³ as described in Lines 19-20, Column 5 (in Japanese text) of Japanese Patent Application Laid-Open No. Hei 9-295824. The patent document describes in Line 17-18, Column 5 (in Japanese text) that "the density of the mat is preferably between 10 and 250kg/m³". However, according to the findings of the applicant of the present patent application, such an arrangement is accompanied by a drawback that short fiber filaments can easily fly out from the mat when the density is not higher than 100kg/m³, and also another drawback that the mat 40 can be torn apart in peripheral directions at a large number of parts thereof to produce layers and cracks 41, 41 by the centrifugal force applied to it and the mat 40 becomes short of the thermally insulating effect because the cracks that extends in peripheral directions at a large number of parts to lose the thermally insulating effect there as shown in FIG. 9.

Furthermore, Japanese Patent Application Laid-Open No. Hei 9-295824 does not describe the position where molten glass is supplied to the spinner. Molten glass is hard glass and, when the liquid phase temperature is high, the temperature of the molten glass in the spinner falls if the supply position is apart from the spinner provided that the spinner is thermally insulated. Then, the viscosity of the molten glass rises, and hence the amount of energy required to heat the molten glass and produce fiber is increased, while the spinner can be deformed and the fine holes of the spinner can become clogged to consequently reduce the service life of the spinner and degrade the distribution of sizes of filaments (degrees of being willowy of filaments).

### SUMMARY OF THE INVENTION

In view of the above identified problems of known methods and apparatus for producing glass fiber, the present invention provides a method of producing glass fiber comprising:
driving a bottomed hollow cylindrical rotor to rotate at high speed around a vertical rotary shaft, said rotor comprising a bottom, a peripheral wall and an annular flange, said peripheral wall being extended upwardly from an outer peripheral edge of the bottom and provided with a large number of fine holes, said annular flange extending inwardly from an upper edge of the peripheral wall;
falling molten glass to the bottom of the rotor; and
ejecting molten glass through said fine holes by centrifugal force generated by the high speed rotation of the rotor, to form the molten glass into filaments, and to produce glass fiber; characterized in that
molten glass is made to fall at a position on the bottom, said position being apart from an inner edge of said annular flange by at least 10mm or more, and apart from an inner surface of said peripheral wall by not more than 75mm, the bottom having a large thickness at the position.

Preferably, the bottom of the rotor comprises a flat disk-shaped bottom wall, and a sloped wall arranged around the bottom wall and showing an outwardly rising slope. Also, a thickness of the sloped wall is largest at a connecting part thereof connected to said bottom wall, and gradually decreases toward the peripheral wall.

Preferably, the bottom of the rotor is thermally insulated from a vicinity of the position where molten glass falls, to a vicinity of the peripheral wall.

In another aspect of the present invention, there is provided an apparatus for producing glass fiber comprising a rotor adapted to rotate at high speed around a vertical rotary shaft;
said rotor having bottomed, hollow and cylindrical shape, said rotor comprising a bottom, a peripheral wall extending upwardly from an outer peripheral edge of the bottom, and an annular flange extending inwardly from an upper edge of the peripheral wall;
said bottom comprising a flat disk-shaped bottom wall, and a sloped wall arranged around a peripheral wall and showing an outwardly rising slope;
molten glass being supplied to said bottom;
said peripheral wall being provided with a large number of fine holes for ejecting molten glass to produce filaments; characterized in that
a thickness of the sloped wall is largest at a connecting part thereof connected to said bottom wall, and gradually decreases toward the peripheral wall; and
molten glass is made to fall at a position on the bottom, said position being apart from an inner edge of said annular flange by at least 10mm or more, and apart from an inner surface of said peripheral wall by not more than 75mm, the bottom having a large thickness at the position.

Preferably, the apparatus further comprises a drawing burner, said drawing burner is arranged at an outer periphery of the rotor, and said drawing burner has an ejecting outlet arranged in parallel with a generatrix line of an outer surface of said peripheral wall, so as to blow a flame flow produced from the drawing burner to the filaments ejected from said fine holes, to fine the filaments.

Preferably, a downwardly extending annular projection is formed around an outer periphery of the sloped wall of the rotor. A thermally insulating dish is arranged below the bottom of the rotor. The thermally insulating dish has an annular recess and an annular projection located at a peripheral edge of the thermally insulating dish. The annular projection of said thermally insulating dish is faced to the annular projection of said bottom. Said annular recess extends to an inside relative to the falling position of molten glass and also to the annular projection of said thermally insulating dish, to form a thermally insulating section.

Preferably, the annular projection of the sloped wall and the annular projection of the thermally insulating dish are apart from each other by a gap of 0.5 to 1.0mm.

### BRIEF DESCRIPTION OF THE DRAWINGS

FIG. 1 is a schematic longitudinal cross sectional view of a first embodiment of an apparatus for producing glass fiber according to the invention.
FIG. 2 is an enlarged schematic longitudinal cross sectional view of a rotor of the first embodiment.
FIG. 3 is a schematic longitudinal cross sectional view of the second embodiment of apparatus for producing glass fiber according to the invention.
FIG. 4 is an enlarged schematic longitudinal cross sectional view of a rotor of the second embodiment.
FIG. 5 is a graph showing glass viscosity - glass temperature curves for hard glass and standard glass.
FIG. 6 is a graph of distribution of filament diameters showing a dispersion of filament diameters of glass fiber, when a temperature fall of fluid glass from a falling position to fine holes is small (and hence the fiber quality is good), and when the temperature fall of fluid glass is large (and hence the fiber quality is bad).
FIG. 7 is a graph illustrating the relationship among the falling position of molten glass (a distance from an inner surface of a peripheral wall), the fiber quality, a fuel gas consumption rate, and a service life of the rotor.
FIG. 8 is a schematic longitudinal cross sectional view of a known apparatus for producing glass fiber.
FIG. 9 is a schematic plan view showing how cracks are produced in a thermally insulating material of a prior art by high speed rotation.

### DESCRIPTION OF THE PREFERRED EMBODIMENTS

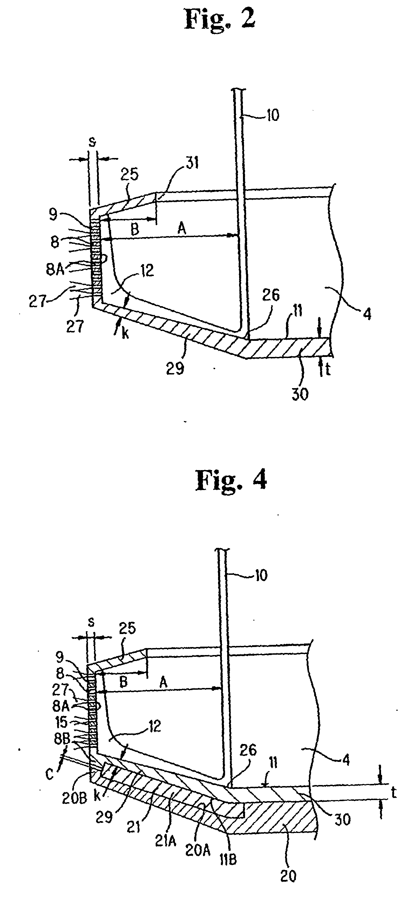

FIGS. 1 and 2 schematically illustrate the first embodiment of an apparatus for producing glass fiber according to the invention. The apparatus of the first embodiment comprises a rotor 4 and a drawing burner 13 arranged at an outer periphery of the rotor 4.

Said rotor 4 can be driven to rotate at high speed around a vertical rotary shaft 7. More specifically, the rotary shaft 7 is rotatably supported by a frame (not shown) at a supporting end 5 thereof, and driven to rotate by a prime mover (not shown) by way of a belt 6. The rotor 4 is rigidly fitted to a lower end of the rotary shaft 7.

The rotor 4 shows a bottomed, hollow and cylindrical profile or shape. The rotor 4 has a bottom 11, a peripheral wall 8 and an annular flange 25.

The bottom 11 comprises a flat and disk-shaped bottom wall 30 and a sloped wall 29 that is arranged around the bottom wall 30, and is upwardly and outwardly inclined.

The peripheral wall 8 is connected to and extended upwardly from an outer edge of the sloped wall 29. The peripheral wall 8 is provided with a large number of fine holes 9 for forming primary fiber. Said holes are bored over an entire periphery of the periphery wall. The peripheral wall 8 has an inner surface 8A and an outer surface 15.

The annular flange 25 extends inwardly from a top end of the peripheral wall 8. The annular flange 25 is provided to increase a strength of the rotor 4 and to prevent molten glass from flying out from the rotor due to centrifugal force. While a width B of the flange is determined in view of a diameter of the rotor, a rotary speed of the rotor and a temperature of molten glass etc., it is at least 20mm, preferably 25mm or more.

The drawing burner 13 has an ejecting outlet 14 arranged in parallel with a generating line of the outer surface 15 of the peripheral wall 8, and adapted to produce secondary fiber (glass fiber) 28.

Said rotor 4 is arranged right below the ejecting nozzle 3 of a forehearth 2 of a glass melting furnace 1, so that molten glass 10 is supplied from the ejecting nozzle 3 as it falls into an inside of the rotor 4. The rotor 4 is driven to rotate at high speed around the vertical rotary shaft 7, while it is being heated by the drawing burner 13, so as to force molten glass to eject out through said fine holes 9, 9 by means of centrifugal force, and to produce filaments (primary fiber) 27. The primary fiber 27 is turned to glass fiber (secondary fiber) 28 by said drawing burner 13.

### <Thickness of the sloped wall 29>

According to the present invention, the bottom wall 30 of said rotor 4 is made to show a large thickness. The bottom wall 30 has a uniform thickness. On the other hand, the peripheral wall 8 is made to show a small thickness. The peripheral wall 8 also has a uniform thickness.

A thickness k of said sloped wall 29 is largest at a part connecting itself to the bottom wall 30 where it is equal to the thickness t of the bottom wall. The thickness gradually decreases toward the peripheral wall 8 and becomes equal to the thickness s of the peripheral wall 8 at a part connecting itself to the peripheral wall 8. In other words, the thickness k of the sloped wall 29 is defined as s ≦ k ≦ t. Since the thickness of the sloped wall is reduced, a weight of the rotor is decreased. The wall thickness is large at a molten glass falling position 26 where molten glass falls, so as to decrease a deformation and an abrasion of the bottom due to molten glass having high temperature, so that the rotor 4 can enjoy a long service life. The thickness of the bottom wall 30 is typically 12mm and that of the sloped wall 29 is 5mm at the outer peripheral edge thereof, although the present invention by no means limited thereto.

### <Distance from the inner surface of the peripheral wall to the molten glass falling position 26>

According to the present invention, the falling position 26 where molten glass 10 falls in into the rotor 4 is apart from the inner surface 8A of the peripheral wall 8 by a distance A (mm). The distance A is larger than a distance B (mm) from said inner surface 8A to an inner edge 31 of the annular flange 25 by 10mm or more. Additionally, the distance A is not larger than 75mm. In other words, the distance A is defined as (B + 10) mm ≦ A ≦ 75mm. For example, it is typically 35mm.

If the distance A is smaller than (B + 10) mm, molten glass 10 can come to contact the inner edge 31 of the flange 25 to prevent molten glass 10 from being supplied into the rotor 4 properly and sufficiently.

If, on the other hand, the distance A exceeds 75mm, a distance between the falling position 26 and the fine holes 9 becomes too large, so that the temperature of molten glass falls or decreases. When the temperature of molten glass falls, a viscosity of molten glass rises to by turn lower a quality of the obtained glass fiber. The "fiber quality" as used herein is determined by a touch or tactile impression of the fiber, a content or amount of a fluff (extremely short filaments) in the obtained glass fiber, and other factors. The fiber quality is good when the filaments of the obtained glass fiber show uniform diameters (see FIG. 6).

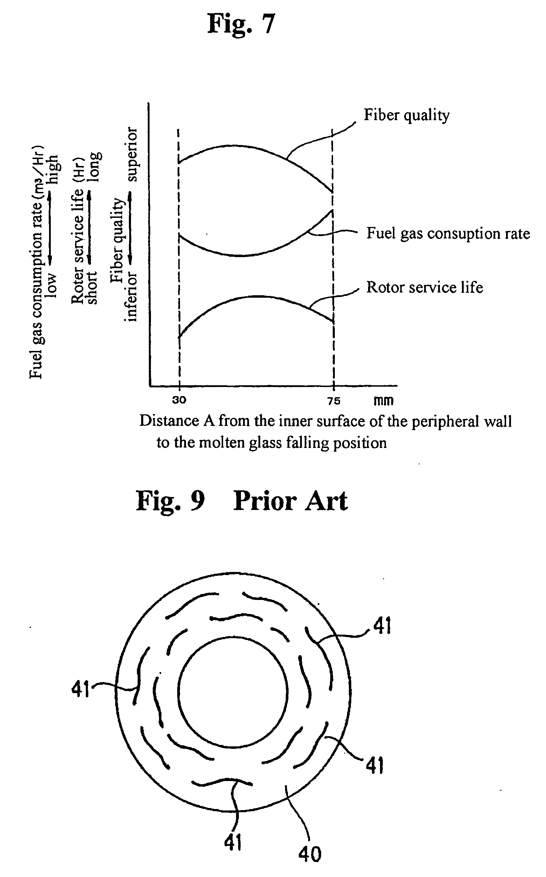

FIG. 7 is a graph illustrating a relationship among the distance A, a fuel gas consumption rate, the service life of the rotor and the fiber quality. In the graph, a vertical axis represents the fuel gas consumption rate (m³/Hr), the service life of the rotor (Hr) and the fiber quality (bad - good), while a horizontal axis represents the falling distance A mm of the molten glass. It will be seen from FIG. 7 that when the distance A is A = 50 to 60mm, the fiber quality is best, the fuel gas consumption rate is lowest, and the rotor requires replacement least (the service life of the rotor is long).

As shown in FIG. 5, a temperature and a viscosity of glass is closely related to each other. As described above, the viscosity changes as the glass temperature changes, so as to affect the quality of the obtained glass fiber.

The service life of the rotor also depends on the distance A from the inner surface of the peripheral wall. It will be same to assume that if the distance A is too small, the glass temperature maintains high, so that such heat deforms the rotor. If, on the other hand, the distance A is too large, the glass temperature falls to increase the glass viscosity. Such highly viscous molten glass would abrade the fine holes.

If the distance A from the inner surface of the peripheral wall is small, the temperature of molten glass maintains high, so as to by turn reduce the fuel gas consumption rate. However, if the glass temperature is too high (the distance A is too small), the fuel gas consumption rate rises. This is probably because the heating effect of the melting furnace 1 and that of the internal burner 22 become ill balanced.

### <Wall thickness of the bottom at the falling position 26>

At the falling position 26, the bottom has the thickness which is defined by (B + 10) mm ≦ A ≦ 75mm, and shows substantially the thickness t. The rotor 4 is heated most at the position 26 where molten glass 10 falls, and hence the falling position 26 is abraded most. Therefore, it is necessary that the rotor 4 has a sufficient thickness at the position 26 where molten glass 10 falls. Additionally, since the wall thickness is large there, the rotor 4 is prevented from being deformed by heat.

### <Raw material glass>

Raw material glass to be used for the purpose of the present invention may be standard glass or hard glass. Hard glass has a glass temperature of 1250° C or less, preferably 1200° C or less, in case of a glass viscosity of 1000 poise, and has a liquid phase temperature of 1050° C or less. On the other hand, the standard glass has preferably a glass temperature of 1050° C or less in case of a glass viscosity of 1000 poise.

FIG. 5 is a graph showing glass viscosity - glass temperature curves for hard glass and standard glass, where a vertical axis represents the glass viscosity (poise), and a horizontal axis represents the glass temperature (°C). As apparent from FIG. 5, the correlation of the glass viscosity and the glass temperature of standard glass differs from that of hard glass. Glass that is located on or to the left of the corresponding curve (glass showing a low glass temperature and a low viscosity) is preferably used for the purpose of the present invention.

### <Method of producing glass fiber>

Glass fiber can be produced in a manner as described below, by using an apparatus as illustrated in FIGS. 1 and 2. As described above, molten glass 10 falls at the falling position 26 where the wall thickness is practically or substantially equal to t in the rotor 4. The fallen molten glass 10 is then moved to the peripheral wall 8 along inner surface of the sloped wall 29 due to the centrifugal force generated by the high speed revolution or rotation of the rotor 4. Since the falling position 26 is located within 75mm from the inner surface 8A of the peripheral wall 8, the decrease of the temperature of the molten glass 10 is only small, and hence the increase of the viscosity of the glass can be minimized.

The molten glass reached to the peripheral wall 8 flows upwardly further along the inner surface 8A of the peripheral wall 8 due to the centrifugal force. Then, this mobile glass 12 is forced to eject out from the fine holes 9 also due to the centrifugal force, and is outwardly elongated by the effect of the centrifugal force to produce primary fiber 27.

A combustion exhaust gas generated in the combustion chamber 16 of the drawing burner 13 is discharged as a flame flow 17 through the ejection port 14 along the outer peripheral surface 15 of the peripheral wall 8. The flame flow 17 collides with said primary fiber 27, 27, and downwardly elongates the filaments of the primary fiber 27 along said generatrix direction, to fine the primary fiber, so as to form secondary fiber (glass fiber) 28.

Said ejecting outlet 14 is realized as an annular slit that is defined by an outer fire port frame 18 and an inner fire port frame 19.

An internal burner 22 is a burner for heating an inside of the annular flange 25 of the rotor 4. A compressed air ejecting nozzle 23 is arranged to regulate the filament lengths of the secondary fiber 28. A gas ejection ring 24 is arranged to regulate or control a quality or a property of the obtained filaments.

### <Second embodiment>

FIGS. 3 and 4 schematically illustrate the second embodiment of an apparatus for producing glass fiber according to the present invention. The components of the second embodiment that are same and identical with those of the first embodiment will not be described any further. In the second embodiment, the bottom 11 of the rotor 4 is covered and thermally insulated by a thermally insulating material 21A, from a vicinity of the falling position 26 of molten glass 10 to a vicinity of the peripheral wall 8.

As in the first embodiment, the falling position of molten glass 10 is defined by (B + 10) mm ≦ A ≦ 75mm. While A = 58mm in the illustrated embodiment, the present invention is by no means limited thereto.

### <Annular projection 8B >

The second embodiment differs from the first embodiment in that the rotor 4 of the second embodiment is provided with an annular projection 8B that extends downwardly from an outer periphery of the bottom 11.

### <Thermally insulating dish 20>

Additionally, a thermally insulating dish 20 is rigidly fitted to the rotor 4 of the second embodiment, and is held in contact with a lower surface 11B of said bottom 11. The thermally insulating dish 20 has an annular recess 20A and an annular projection 20B arranged at an outer peripheral edge thereof. The dish 20 can be prepared by using a known appropriate material. Preferable materials that can be used for the dish 20 include heat resisting steel such as stainless steel or Inconnel. The dish 20 may be made of the material same as that of the rotor (e.g., Ni-based heat resisting metal).

### <Thermally insulating section 21, thermally insulating material 21A>

A thermally insulating section 21 is formed by said outer lower surface 11B, the annular recess 20A and the annular projection 20B. The section 21 is filled with a thermally insulating material 21A. A castable refractory material or an inorganic fiber thermally insulating material may be used for the material 21A. An inorganic fiber thermally insulating material is preferable in view of thermal insulation effect.

For example, a ceramic molded product having a density of 300kg/m³, a thickness of 12mm and a thermal conductivity of 0.11kcal/m·h·° C (at 700° C) is used for the material 21A. The molded product is filled into said thermally insulating section 21, compressed to a thickness of 10mm, and rigidly bonded to the thermally insulating dish 20.

### <Gap between the annular projection 8B of the sloped wall 29 and an annular projection 20B of the thermally insulating dish 20>

An annular projection 20B is formed upwardly along an outer periphery of the thermally insulating dish 20. The annular projection 20B is faced to the annular projection 8B of the sloped wall 29 each other. A gap is provided between the annular projection 20B and the annular projection 8B in order to prevent the rotor 4 from being deformed and to increase the strength of the rotor 4. The gap can absorb vibrations of the rotor 4. The gap is preferably between 0.5 and 1.0mm. If the gap is smaller than 0.5mm, it is no longer possible to absorb vibrations of the rotor 4, the rotor 4 may show only an insufficient strength, and it can easily become deformed because of the insufficient gap. If, on the other hand, the gap exceeds 1.0mm, the thermally insulating material 21A filled in the thermally insulating section 21 can spin out through the gap C by the centrifugal force generated by the high speed revolutions of the rotor 4.

For example, the gap C between the annular projection 20B and the annular projection 8B is typically equal to 0.8mm. With this value, the problem that the thermally insulating material 21A spins out through the gap C by the centrifugal force does not occur.

Since the rotor revolves or rotates at high speed, molten glass having high temperature flows along the inner surface of the sloped wall 29. Therefore, the inner part of the sloped wall 29 tends to expand more than the outer part of the sloped wall 29. However, with the second embodiment, the strength is not reduced to the extent by which the weight of the rotor is reduced, because (1) the strength of the sloped wall 29 is raised by the annular projection 8B, (2) the strength of the rotor 4 is increased by the thermally insulating dish 20 arranged at a lower part of the rotor 4 and (3) the thickness k of the sloped wall 29 is gradually reduced from the value equal to the thickness t of the thick bottom wall 30 to the value equal to the thickness s of the thin peripheral wall. Thus, the bottom 11 of the second embodiment is less liable to be deformed, and hence the rotor 4 is less liable to be deformed by high speed revolutions. As a result, the rotor 4 can enjoy a prolonged service life.

### Example 1, Comparative Example 1

Glass fiber was produced by using the producing apparatus as shown in FIG. 1. The falling position 26 of molten glass 10 was arranged at a position from the inner surface 8A of the peripheral wall 8 by 45mm (Example 1). In this example, standard glass (glass containing boric acid (B₂O₃), or glass free from boric acid, and showing a viscosity of about 1000 poises at 1070° C) as shown in FIG. 5 was used.

Glass fiber was also produced by means of the method same as the one used in Example 1 except that the falling position was arranged at a position from the inner surface 8A by 80mm and that the diameters and the arrangement of the fine holes 9 were altered (Comparative Example 1). Table 1 below summarily shows the obtained results.

Example 1 and Comparative Example 1 differ from each other in terms of the diameters and the arrangement of the fine holes 9, so that the spinning amount of the Comparative Example 1 is same as that of the Example 1, so as to compare them for the fuel gas consumption rate and the service life of the rotor.

**Table 1**

| | | Example 1 | Comparative Example 1 |
|---|---|---|---|
| The distance A (mm) from the inner surface of the peripheral wall of the rotor to the falling position of molten glass | | 45 | 80 |
| The molten glass temperature (°C) (at the falling position in the bottom of the rotor) | | 1090 | 1090 |
| The peripheral wall temperature of the rotor (° C) | upper part | 990 | 980 |
| | middle part | 1000 | 985 |
| | lower part | 980 | 950 |
| The temperature fall from the molten glass falling position to the peripheral wall inner surface of the rotor | | small | large (+25°C) |
| The hole diameter (mm) | | upper part: 0.8 | upper part: 0.9 |
| | | other parts: 0.7 | middle part: 0.8 |
| | | | lower part: 0.9 |
| The thermally insulating section | | not provided | not provided |
| Average diameter of the fiber (µm) | | 5-6 | 5-6 |
| Fiber quality | | superior | inferior |
| Spinning amount (Kg/Hr) | | 400 | 400 |
| Fuel gas consumption rate (m³/Hr) | | 20 | 23 |
| Rotor service life (Hr) | | 380 | 300 |

It will be appreciated that the distance A from the peripheral wall inner surface 8A to the molten glass falling position 26 in Example 1 was shorter than that in Comparative Example 1. Thus, when the molten glass was reached to the peripheral wall 8, the temperature fall of molten glass in Example 1 was less than that in Comparative Example 1 by about 25° C. Therefore, the viscosity rise of molten glass 12 in Examplel 1 was less than that in Comparative Example 1. Thus, it was possible to reduce the hole diameters of the fine holes 9, 9. Therefore, it was possible to reduce the fuel gas consumption rate of the drawing burner 13 for transforming primary fiber 27 into secondary fiber 28 in Example 1.

In the Comparative Example 1, the temperature of the molten glass 12 was remarkable fallen, and therefore the viscosity of mobile glass 12 was raised remarkably. Thus, it was necessary to make the fine holes 9, 9 have a large hole diameters. Additionally, since the viscosity of the molten glass 12 was high, it was necessary to form hole diameters of holes 9 in a lower part larger than that in a middle part. Thus, the obtained primary fiber 27 showed large diameters, so that the fuel consumption rate was high in Comparative Example 1. Since the fine holes had to be formed with more varied diameters and since the viscosity of mobile glass 12 was higher in Comparative Example 1, the distribution of filament diameters of the obtained glass fiber were more dispersed in Comparative Example 1 (see FIG. 6). As a result, the obtained glass fiber of Comparative Example 1 was of a lower quality in terms of touch of the fiber, the ratio of the fluff (extremely short filaments) and other factors.

A filament forming temperature (a glass temperature that can make the viscosity 1000 poises or less) is lower for standard glass than for hard glass (by about 80 to 100° C. Therefore, when standard glass is used, the service life of the rotor 4 depends more on the increase of the filament diameters as defined by the fine holes 9, 9 that are abraded due to the increased viscosity, and on the degraded distribution of filament diameters than on the deformation of the rotor 4 that is produced as molten glass having high temperature touches the rotor 4. The fine holes are abraded more when the glass temperature is high and hence the glass viscosity is high (hard).

In Comparative Example 1, the fine holes of a lower part of the rotor (having the larger diameter) were located most remotely from the ejecting outlet 14 of the drawing burner 13. Therefore, it was difficult to control the fininig operation of the primary fiber 27 injected through the fine holes of the lower part. Thus, if the diameter of the fine holes of the lower part was increased by abrasion, the filament diameters of the obtained glass fiber were increased to degrade (disperse) the distribution of filament diameters. Thus, the rotor 4 has to be replaced in such a case. In other words, the service life of the rotor 4 is shortened. It was found that the quality of the obtained glass fiber was degraded when the distance A (mm) to the falling position was 80mm as in the Comparative Example.

### Example 2, Comparative Example 2

Glass fiber was produced from hard glass by using a producing apparatus as shown in FIG. 1 (Example 2).

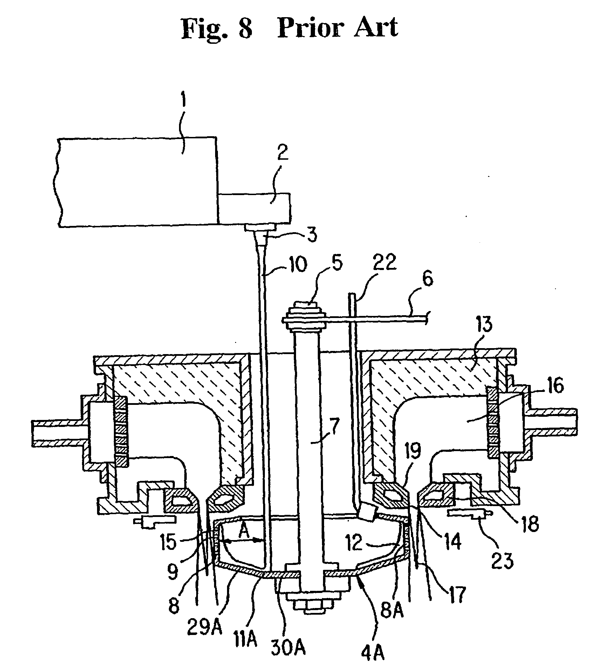

Besides, glass fiber was produced from hard glass same as that used in the Example 2 by using the producing apparatus as shown in FIG. 8. In the producing apparatus of FIG. 8, both the bottom wall 30A and the sloped wall 29A of the bottom 11A of the rotor 4A have a wall thickness same as that of the peripheral wall 8. No thermally insulating section is arranged in the producing apparatus of FIG. 8.

Table 2 below summarily shows the obtained results.

**Table 2**

| | | Example 2 | Comparative Example 2 |
|---|---|---|---|
| Wall thickness of the sloped wall (mm) | | maximum: 12 minimum: 5 | 12 (uniform) |
| The thermally insulating section | | provided | not provided |
| The distance A (mm) from the inner surface of the peripheral wall of the rotor to the falling position of molten glass | | 58 | 58 |
| The molten glass temperature (° C) (at the falling position of in the bottom of the rotor) | | 1170 | 1170 |
| The peripheral wall temperature of the rotor (°C) | upper part | 1065 | 1040 |
| | middle part | 1085 | 1060 |
| | lower part | 1060 | 1010 |
| The hole diameter (mm) | | upper part: 1.2 | upper part: 1.3 |
| | | middle part: 1.1 | middle part: 1.2 central area: 1.1 |
| | | lower part: 1.1 | lower part: 1.3 |
| The average diameter of the fiber (*µ*m) | | 6-7 | 6-7 |
| Fiber quality | | superior | inferior |
| Spinning amount (Kg/Hr) | | 400 | 400 |
| fuel gas consumption rate (m³/Hr) | | 13 | 19 |
| Rotor service life (Hr) | | 340 | 270 |

In the Example 2, molten glass 10 was made to fall to a position apart from the inner surface 8A of the peripheral wall 8 of the rotor 4 by 58mm. At this falling position 26, the bottom wall of the bottom 11 was thick and was provided with a thermally insulating material 21A. Therefore, the temperature fall of mobile glass 12 was small, and it was possible to maintain the viscosity of mobile glass to a low level. As a result, it was possible to produce primary fiber through a large number of fine holes 9, 9 whose diameters are smaller than their counterparts of Comparative Example 2. Also, it was possible to obtain filaments of secondary fiber (glass fiber) having filament diameters same as those of the secondary fiber of Comparative Example 2 with a lower fuel gas consumption rate (fuel gas for the drawing burner 13).

Since the apparatus of Example 2 was provided with the thermally insulating section 21, the temperature balance of the peripheral wall 8 of the rotor 4 was improved. Particularly, the temperature of the lower part of the peripheral wall 8 was held to 1060° C, and hence the fine holes 9 of the lower part of the peripheral wall 8 were free from clogging due to devitrification (crystallization), and hence the service life of the rotor 4 was prolonged.

According to the present invention, since the molten glass falling position is arranged as close to the peripheral wall as possible (apart from the inner surface of the peripheral wall by not greater than 75mm), the temperature fall of mobile glass can be decreased, to prevent the glass viscosity from rising. Thus, the obtained glass fiber shows an improved fiber quality.

As described above, since the temperature fall of mobile glass is decreased, the fuel gas consumption rate is reduced to by turn reduce the producing cost.

As described above, since the viscosity of mobile glass is prevented from rising, the fine holes of the rotor are prevented from being clogged, to by turn prolong the service life of the rotor. Additionally, since the fine holes of the rotor are prevented from being clogged, the productivity of the produce of glass fiber does not fall.

Since the molten glass falling position is apart from the inner surface of the peripheral wall by not less than 35mm, the falling molten glass is prevented from touching the annular flange, and hence the spinning amount is prevented from falling.

Since the bottom of the rotor is thick at the molten glass falling position, the rotor is prevented from being deformed and abraded at the falling position if molten glass having high temperature is made to fall there.

When the thickness of the sloped wall is reduced toward the peripheral wall, the weight of the rotor can be reduced, to by turn reduce the running cost of the rotor and hence the glass fiber producing apparatus. Since the wall thickness of the bottom of the rotor is large at the molten glass falling position, the strength of the rotor is held high, even if the thickness of the sloped wall is reduced in the above described manner.

When the bottom of the rotor is thermally insulated from the molten glass falling position to the vicinity of the peripheral wall, it is possible to effectively prevent the temperature of the mobile glass thermal insulator from falling, and the glass viscosity from increasing.

The thermally insulating section is not arranged in the central area of the bottom of the rotor relative to the molten glass falling position because it is not necessary to thermally insulate it. Thus, the cost of maintaining the thermally insulating section is minimized.

When the gap between the annular projection of the sloped wall and the annular projection of the thermally insulating dish is defined to be 1.0mm or less, the thermally insulating material does not fly out to the outside at all. When, on the other hand, the gap is defined to be 0.5mm or more, the rotor is prevented from being deformed, and its strength is increased because of the clearance, even if the sloped wall of the rotor is deformed.

## Claims

1. A method of producing glass fiber comprising:
driving a bottomed hollow cylindrical rotor (4) to rotate at high speed around a vertical rotary shaft (7), said rotor (4) comprising a bottom (11), a peripheral wall (8) and an annular flange (25), said peripheral wall (8) being extended upwardly from an outer peripheral edge of the bottom (11) and provided with a large number of fine holes (9), said annular flange (25) extending inwardly from an upper edge of the peripheral wall (8);
falling molten glass (10) to the bottom (11) of the rotor (4); and
ejecting molten glass (10) through said fine holes (9) by centrifugal force generated by the high speed rotation of the rotor (4), to form the molten glass into filaments, and to produce glass fiber; **characterized in that**
molten glass is made to fall at a position (26) on the bottom (11), said position (26) being apart from an inner edge (31) of said annular flange (25) by at least 10mm or more, and apart from an inner surface (8A) of said peripheral wall (8) by not more than 75mm, the bottom (11) having a large thickness at the position (26).

2. The method according to claim 1, wherein
the bottom (11) of the rotor (4) comprises a flat disk-shaped bottom wall (30), and a sloped wall (29) arranged around the bottom wall (30) and showing an outwardly rising slope, and
a thickness (k) of the sloped wall (29) is largest at a connecting part thereof connected to said bottom wall (30), and gradually decreases toward the peripheral wall (8).

3. The method according to claim 1, wherein
the bottom (11) of the rotor (4) is thermally insulated from a vicinity of the position (26) where molten glass (10) falls, to a vicinity of the peripheral wall (8).

4. An apparatus for producing glass fiber comprising a rotor (4) adapted to rotate at high speed around a vertical rotary shaft (7);
said rotor (4) having bottomed, hollow and cylindrical shape, said rotor (4) comprising a bottom (11), a peripheral wall (8) extending upwardly from an outer peripheral edge of the bottom (11), and an annular flange (25) extending inwardly from an upper edge of the peripheral wall (8);
said bottom (11) comprising a flat disk-shaped bottom wall (30), and a sloped wall (29) arranged around a peripheral wall (8) and showing an outwardly rising slope;
molten glass (10) being supplied to said bottom (11);
said peripheral wall (8) being provided with a large number of fine holes (9) for ejecting molten glass to produce filaments; **characterized in that**
a thickness (k) of the sloped wall (29) is largest at a connecting part thereof connected to said bottom wall (30), and gradually decreases toward the peripheral wall (8); and
molten glass is made to fall at a position (26) on the bottom (11), said position (26) being apart from an inner edge (31) of said annular flange (25) by at least 10mm or more, and apart from an inner surface (8A) of said peripheral wall (8) by not more than 75mm, the bottom (11) having a large thickness at the position (26).

5. The apparatus according to claim 4, further comprising a drawing burner (13),
said drawing burner (13) is arranged at an outer periphery of the rotor (4), and
said drawing burner (13) has an ejecting outlet (14) arranged in parallel with a generatrix line of an outer surface (15) of said peripheral wall (18), so as to blow a flame flow produced from the drawing burner (13) to the filaments ejected from said fine holes (9), to fine the filaments.

6. The apparatus according to claim 4, wherein
a downwardly extending annular projection (8B) is formed around an outer periphery of the sloped wall (29) of the rotor (4),
a thermally insulating dish (20) is arranged below the bottom (11) of the rotor (4),
the thermally insulating dish (20) has an annular recess (20A) and an annular projection (20B) located at a peripheral edge of the thermally insulating dish (20),
the annular projection (20B) of said thermally insulating dish is faced to the annular projection (8B) of said bottom (11), and
said annular recess (20A) extends to an inside relative to the falling position (26) of molten glass (10) and also to the annular projection (20B) of said thermally insulating dish, to form a thermally insulating section (21).

7. The apparatus according to claim 4, wherein
the annular projection (8B) of the sloped wall (29) and the annular projection (20B) of the thermally insulating dish (20) are apart from each other by a gap of 0.5 to 1.0mm.
